Europäisches Patentamt

European Patent Office

Office européen des brevets

(11) Veröffentlichungsnummer: **0 140 038**
A2

## (12) EUROPÄISCHE PATENTANMELDUNG

(21) Anmeldenummer: 84110487.0

(22) Anmeldetag: 04.09.84

(51) Int. Cl.⁴: **H 02 G 1/12**

(30) Priorität: 05.09.83 DE 3331979

(43) Veröffentlichungstag der Anmeldung:
08.05.85 Patentblatt 85/19

(84) Benannte Vertragsstaaten:
AT BE CH DE FR GB IT LI LU NL SE

(71) Anmelder: Krampe, Franz
Bergstrasse 5
D-4715 Ascheberg-Herbern(DE)

(71) Anmelder: Scheiter, Siegfried
An der Vogelroute 38
D-4715 Ascheberg 2(DE)

(72) Erfinder: Krampe, Franz
Bergstrasse 5
D-4715 Ascheberg-Herbern(DE)

(72) Erfinder: Scheiter, Siegfried
An der Vogelroute 38
D-4715 Ascheberg 2(DE)

(74) Vertreter: Patentanwälte Schulze Horn und Hoffmeister
Goldstrasse 36
D-4400 Münster(DE)

(54) Abisoliergerät für Kabelenden.

(57) Abisoliergerät für Kabelenden, bei dem an der Wirkseite von zwei durch Druck auf ihre Wirkenden gegeneinander bewegbaren Greifschenkeln jeweils eine Abisolierschneide mit mindestens einer Einkerbung angeornet ist, die Abisolierschneiden in der Schneidstellung derart auf Abstand gehalten sind, daß ein Mindestabstand zwischen den Schneiden gegeben ist, und die Greifschenkel an dem der Wirkseite entgegengesetzten Ende mit einem Griffteil verbunden sind, wobei der Griffteil (1) ein seitlich geöffnetes U-Profil aufweist, an dessen gegenüberliegenden Innenseiten die Greifschenkel (2, 2') befestigt sind.

Fig.1

EP 0 140 038 A2

## Abisoliergerät für Kabelenden

Die Erfindung betrifft ein Abisoliergerät für Kabelenden, bei dem an der Wirkseite von zwei durch Druck auf ihre Wirkenden gegeneinander bewegbaren Greifschenkeln jeweils eine Abisolierschneide mit mindestens einer Einkerbung angeordnet ist, die Isolierschneiden in der Schneidstellung derart auf Abstand gehalten sind, daß ein Mindestabstand zwischen den Schneiden gegeben ist, und die Greifschenkel an dem der Wirkseite entgegengesetzten Ende mit einem Griffteil verbunden sind.

Durch die DE-OS 30 02 302 ist ein Abisoliergerät für Kabelenden bekannt, das ein im wesentlichen geschlossenes Griffteil aufweist. Bei diesem Gerät sind aus dem Griffteilmaterial am vorderen Wirkende Zungen ausgestanzt, die beim Abisolieren eines Kabelendes auf zwei Abstreif- und Schneidarme gedrückt werden. Ohne Druckeinwirkung kehren die elastischen Zungen automatisch in ihre Ausgangslage zurück.

Die Abstreif- und Schneidarme des Gerätes, die die Abisolierschneiden tragen, sind in einer Öffnung am vorderen Griffteilende angeordnet. Diese Öffnung ist am hinteren Ende der Schneidarme geschlossen, so daß zwischen die Arme nur Kabelenden mit einer begrenzten Länge eingelegt werden können. Beim praktischen Einsatz des Abisoliergerätes ist es aber häufig erforderlich, den dicken Außenmantel von langen Kabelendstücken abzuisolieren.

Der Erfindung liegt daher die Aufgabe zugrunde, ein Abisoliergerät anzugeben, in dem selbst lange Kabelenden problemlos abisoliert werden können. Es soll ferner gewährleistet sein, daß in dem Gerät die Kabelenden sicher gehalten werden.

Diese Aufgabe wird bei einem erfindungsgemäßen Abisoliergerät dadurch gelöst, daß das Griffteil ein seitlich geöffnetes U-Profil aufweist, an dessen gegenüberliegenden Innenseiten die Greifschenkel befestigt sind.

Gemäß der Erfindung können in das U-Profil des Abisoliergerätes lange Enden selbst von dicken Kabel eingelegt werden. Die Länge eines Kabelendes ist durch die Bauweise des Gerätes nicht beschränkt, da das U-Profil des Griffteils praktisch einen durchgehenden Kanal für das Kabelende bildet. Ein Kabelende kann also in das U-Profil eingelegt werden, ohne den Zugriff zur Schnittstelle zu behindern.

Um einem eingelegten Kabel einen sicheren Halt in dem Gerät zu geben, der für einen einwandfreien Schnitt wichtig ist, weisen die Greifschenkel zumindest auf dem zur Schneidseite gerichteten Teil eine Längsführung für ein in das U-Profil eingelegtes Kabel auf. Eine besonders einfache Kabellängsführung liegt dann vor, wenn die Greifschenkel in der Längsführung ein etwa V-förmiges Profil aufweisen.

Zur Erzielung eines einwandfreien Schnittes ist ferner vorgesehen, daß der Öffnungswinkel der Einkerbungen in den Abisolierschneiden geringer ist als der Öffnungswinkel der V-Förmigen Längsführung.

Das bei langen Kabelenden auftretende Problem, daß der Isolationsmantel nach dem Durchtrennen nur mühsam abgezogen werden kann, läßt sich bei dem erfindungsgemäßen Abisoliergerät auf einfache Weise durch Druck- oder Greifbacken an den Wirkenden der Greifschenkel lösen, deren Seitenflächen Aussparungen aufweisen, die bei zusammengedrückten Greifbacken eine Kabeldurchführung bilden, in der ein Schneiddorn zum Längsaufschlitzen des Kabelmantels angeordnet ist.

Vorteilhaft weisen die Druck- oder Greifbacken zumindest eine Führung auf, die einer Einkerbung in den Abisolierschneiden für kleinere Kabeldurchmesser zugeordnet ist und parallel zu den Greifschenkeln verläuft.

Bei dem erfindungsgemäßen Abisoliergerät wird ein abzuisolierendes Kabelende von den Schneiden der Greifschenkel erfaßt und festgehalten, wenn diese durch Druck gegeneinander bewegt werden. Das Einschneiden des Isolationsmantels des Kabels erfolgt durch Drehen des Gerätes, wobei die Schneidkanten der Einkerbungen den Isolationsmantel auftrennen. Aufgrund der Tiefe der Einkerbung wird ein zu tiefer Einschnitt vermieden, bei dem der Metalleiter beschädigt werden könnte. Auch dünnere Kabel können in der Einkerbung abisoliert werden. Überraschenderweise kann durch die direkte Druckbetätigung der Schneidenden der Greifschenkel der Schnitt gut kontrolliert und eine Quetschung des Metalleiters beim Abisolieren vermieden werden. Aus der Schneidstellung werden die Greifschenkel des Abisoliergerätes durch Federdruck in ihre Ausgangsstellung zurückgeführt.

Ersichtlicherweise ist das erfindungsgemäße Abisoliergerät einfach und handlich aufgebaut, und da das Gerät für die Anforderungen in der Praxis besonders gut geeignet ist, kann von einer hervorragenden Lösung der anstehenden Probleme gesprochen werden.

Ein Ausführungsbeispiel der Erfindung ist in der Zeichnung dargestellt und wird im folgenden näher beschrieben. Es zeigen:

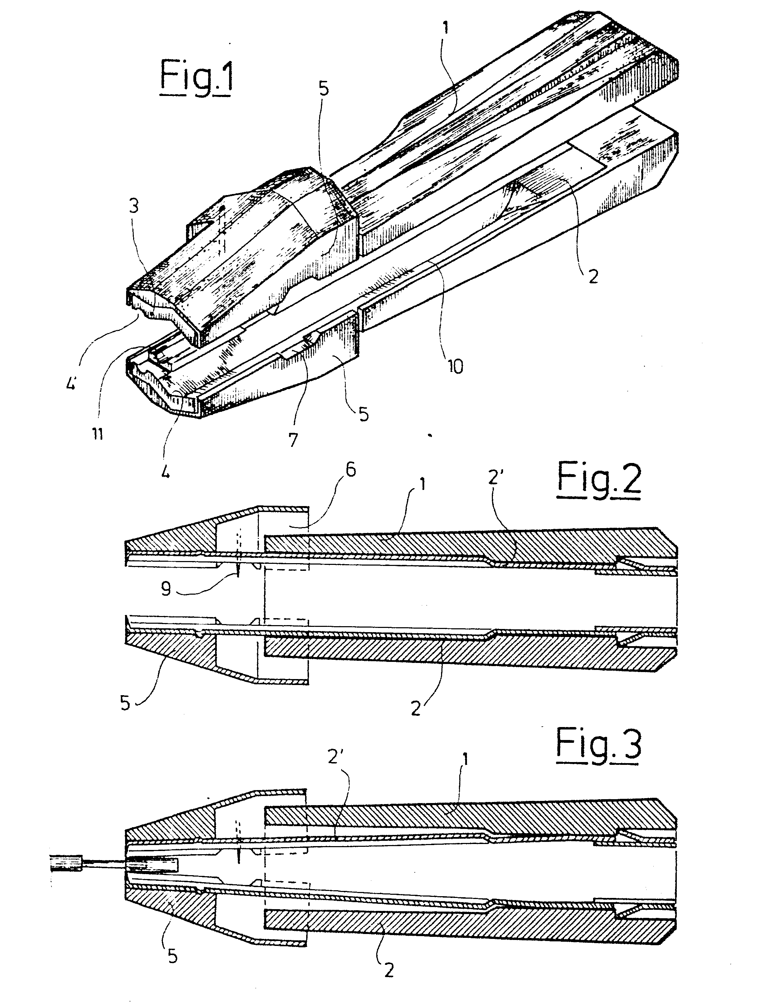

Figur 1 eine Ansicht eines erfindungsgemäßen Abisoliergerätes,

Figur 2 einen Längsschnitt durch das Gerät gemäß Figur 1 und

Figur 3 einen Längsschnitt durch das Gerät in Schneidstellung.

Gemäß den Figuren besteht ein erfindungsgemäßes Abisoliergerät für Kabelenden im wesentlichen aus mit einem Griffteil 1 verbundenen Greifschenkeln 2 und 2', die an ihrem Schneidende eine Schneide 3 mit Einkerbungen 4 und 4' aufweisen, und Druck- bzw. Greifbacken 5 an den Schneidenden der Schenkel 2 und 2'.

Der Griffteil 1 des Abisoliergerätes weist ein U-Profil auf, dessen Öffnung zu einer Seite des Griffteils hin gerichtet ist. Die der Öffnung des U-Profils gegenüberliegende Seitenfläche kann griffgerecht ausgeformt sein, damit das Werkzeug gut in der Hand liegt. Mit den Innenseiten der Schenkel des U-Profils ist jeweils das der Schneidseite abgewandte Ende der Greifschenkel 2 und 2' verbunden. Die Greifschenkel 2 und 2' bestehen aus einem Bandabschnitt aus Federstahl und können bei Druckbelastung der Backen 5 gegen ihren eigenen Federdruck gegeneinander bewegt werden. In der Ausgangsstellung liegen die Greifschenkel 2 und 2' an der Innenseite des U-Profils des Griffteils an. Das U-Profil des Griffteils 1 bildet zusammen mit den Greifschenkeln 2 und 2' eine Längsdurchführung im Werkzeug, in die lange Kabelenden problemlos eingelegt werden können und somit beim Abisolieren nicht stören.

Der vordere, zur Schneidseite hin gerichtete Teil der Greifschenkel 2 und 2' ist als V-förmige Rinne 10 ausgebildet, die als Kabelführung dient und bei zusammengedrückten Greifschenkeln dafür sorgt, daß ein eingelegtes Kabel rutschfrei gehalten wird.

An den Schneidenden der Greifschenkel 2 und 2' sind jeweils Abisolierschneiden 3 einstückig angeformt, die nach innen gegeneinander gerichtet sind. Jede der Schneiden 3 weist zwei Einkerbungen mit unterschiedlicher Tiefe auf, eine Tiefe, winkelförmige Einkerbung 4 für den Außenmantel eines Kabels und eine kleinere, etwa halbkreisförmige Einkerbung 4' für den Mantel von dünneren Kabelsträngen.

Der Isolationsmantels eines Kabels, das zwischen den Schneiden 3 durch Druck auf die Backen 5 gehalten wird, wird beim Drehen des Abisoliergerätes durch die geschliffenen Ränder der Einkerbungen 4 und 4' kreisförmig eingeschnitten und durchtrennt. Aufgrund der Tiefe der Einkerbungen kann die Isolierung durchtrennt werden, ohne daß ein metallischer Leiter bzw., wenn ein äußerer Schutzmantel abisoliert wird, die innenliegenden Kabelstärnge verletzt werden. Die Tiefe der Einkerbungen 4 und 4' ist so gewählt, daß sie in etwa der Stärke des Schutzmantels bei einem mehrpoligem Kabel bzw. der Stärke der Isolierung einzelner dünner Kabelstränge entspricht.

Wichtig für einen einwandfreien Schnitt ist weiterhin, daß der Öffnungswinkel der Einkerbung 4 kleiner ist als der Öffnungswinkel der V-förmigen Längsrinne 10 in den Greifschenkeln 2 und 2'. Der Winkel der Einkerbung 4 kann beispielsweise $120^{\circ}$ und der der Rinne 10 $140^{\circ}$ betragen.

Die Druck- oder Greifbacken 5 des Abisoliergerätes bestehen aus Formteilen, die ähnlich wie das Griffende einer Kombizange ausgebildet sind. Die Greifbacken 5 sind vorzugsweise aus Kunststoff hergestellt und können auf ihrer Oberseite so ausgeformt sein, daß für die bei der Druckbelastung der Greifbacken verwendeten Daumen bzw. Zeigefinger der Hand eine geeignete Anlage geschaffen ist. Im Bereich des Schneidendes sind die Greifschenkel 2 und 2' von den Greifbacken 5 eingefaßt, wobei die Abschlußkanten der Seitenflächen der Greifbacken 5 die Schneiden 3 etwas überragen, so daß bei zusammengedrückten Greifbacken 5 ein Mindestabstand zwischen den Schneiden 3 bleibt und die Schneiden sich somit nicht gegenseitig berühren.

Die Greifbacken 5 überlappen teilweise mit dem Griffteil 1, wodurch eine handliche Länge des Abisoliergerätes erreicht wird. Entsprechende Öffnungen 6 in den Greifbacken sorgen dafür, daß die Bewegung der Greifschenkel 2 dadurch nicht behindert wird.

In Abstand zu den Schneiden 3 weisen die Seitenflächen der Greifbacken 5, die die Greifschenkel 2 und 2' überragen, jeweils zu beiden Seiten Aussparungen 7 auf. Bei zusammengedrückten Greifbacken 5 bilden die Aussparungen 7 eine seitliche Durchführung, in die ein Kabel quetschungsfrei eingelegt werden kann. In der Durchführung ist ein Schneiddorn 9 angeordnet, mit dem der Schutzmantel eines in der Durchführung eingeklemmten Kabels längs aufgeschlitzt werden kann.

Weiterhin ist bei dem Abisoliergerät ebenso wie für dicke Kabelenden auch für dünne Kabelenden eine rinnenförmige Führung 11 vorhanden, die hinter der Einkerbung 4' parallel zu den Greifschenkeln 2 und 2' im Seitenwandbereich der Greifbacken 5 verläuft.

Patentansprüche:

1. Abisoliergerät für Kabelenden, bei dem an der Wirkseite von zwei durch Druck auf ihre Wirkenden gegeneinander bewegbaren Greifschenkeln jeweils eine Abisolierschneide mit mindestens einer Einkerbung angeornet ist, die Abisolierschneiden in der Schneidstellung derart auf Abstand gehalten sind, daß ein Mindestabstand zwischen den Schneiden gegeben ist, und die Greifschenkel an dem der Wirkseite entgegengesetzten Ende mit einem Griffteil verbunden sind, dadurch gekennzeichnet, daß der Griffteil (1) ein seitlich geöffnetes U-Profil aufweist, an dessen gegenüberliegenden Innenseiten die Greifschenkel (2, 2') befestigt sind.

2. Abisoliergerät nach Anspruch 1, dadurch gekennzeichnet, daß die Greifschenkel (2, 2'), zumindest auf dem zur Schneidseite gerichteten Teil eine Längsführung (10) für ein in das U-Profil eingelegtes Kabel aufweisen.

3. Abisoliergerät nach Anspruch 1 oder 2, dadurch gekennzeichnet, daß die Längsführung (10) der Greifschenkel (2, 2') ein etwa V-förmiges Profil aufweist.

4. Abisoliergerät nach den Ansprüchen 1 bis 3, dadurch gekennzeichnet, daß der Öffnungswinkel der Einkerbungen (4) in den Abisolierschneiden geringer ist als der Öffnungswinkel der V-förmigen Längsführung (10).

5. Abisoliergerät nach Anspruch 1, gekennzeichnet durch Druck- oder Greifbacken (5) an den Wirkenden der Greifschenkel (2, 2'), deren Seitenflächen Aussparungen (7) aufweisen, die bei zusammengedrückten Greifbacken (5) eine Kabeldurchführung bilden, in der ein Schneiddorn (9) zum Längsaufschlitzen des Kabelmantels angeordnet ist.

6. Abisoliergerät nach den Ansprüchen 1 bis 5, dadurch gekennzeichnet, daß die Druck- oder Greifbacken (5) zumindest eine Führung 11 aufweisen, die einer Einkerbung (4') in den Abisolierschneiden für kleinere Kabeldurchmesser zugeordnet ist und parallel zu den Greifschenkeln (2, 2') verläuft.

111

Fig.1

Fig.2

Fig.3